# EUROPÄISCHE PATENTANMELDUNG

(11) **EP 0 977 065 A2**
(43) Veröffentlichungstag der Anmeldung: **02.02.2000**
(21) Anmeldenummer: 99112633.5
(22) Anmeldetag: 02.07.1999
(51) Int. Cl.: G02B 7/00, C03C 27/04

(54) **Ultraschallverschweissung von optischen Bauteilen**

(30) Priorität: 28.07.1998 DE 19833590
(71) Anmelder: Carl Zeiss, 89518 Heidenheim (Brenz) (DE); Carl-Zeiss-Stiftung trading as Carl Zeiss, 89518 Heidenheim (Brenz) (DE); Eifler, Dietmar, Prof. Dr.-Ing. habil., 67653 Kaiserslautern (DE)
(72) Erfinder: Holderer, Hubert, 89551 Königsbronn (DE); Rümmer, Peter, 73447 Oberkochen (DE); Deyhle, Johannes, 89551 Königsbronn (DE); Eifler, Dietmar, Prof. Dr.-Ing. habil., 76764 Rheinzabern (DE); Solbach, Daniel, Dr.rer.pol., 40549 Düsseldorf (DE); Wagner, Guntram, Dr.-Ing., 67697 Otterberg (DE)

(57) **Zusammenfassung**

Es wird ein Verfahren zur Verschweißung eines ausgedehnten optischen Bauteils an eine Metallbefestigung beschrieben. Um die Ultraschallschweißung von optischen Bauteilen an Metallbefestigungen auch für ausgedehnte, hochempfindliche optische Bauteile verfügbar zu machen, insbesondere, wenn diese aufgrund ihrer hohen Empfindlichkeit und/oder hohen optischen Qualität nur geringsten Belastungen ausgesetzt werden dürfen, wird vorgeschlagen, daß das transparente optische Bauteil zumindest an seinem Rand allgemein gegenüberliegend und benachbart einer vorgesehenen Befestigungsstelle vibrationsdämpfend gehalten wird, die Befestigung auf der vorgesehenen Befestigungsstelle aufgelegt wird, die Metallbefestigung auf die vorgesehene Befestigungsstelle am Rand des ausgedehnten optischen Bauteils aufgesetzt wird, die Sonotrode auf die Befestigung unter Ausübung allenfalls geringer Biegemomente und Scherkräfte aufgesetzt und die Ultraschallschweißung durchgeführt wird.

## Beschreibung

Die vorliegende Erfindung betrifft ein Verfahren zur Verschweißung eines ausgedehnten optischen Bauteils an eine Metallbefestigung und eine optische Baugruppe.

Das Verbinden von transparenten optischen Bauteilen mit metallischen Befestigungen ist prinzipiell bekannt. Je nach Verwendung können die Verbindungen durch Klemmen, Kleben oder auf andere Weise hergestellt werden.

Für hochempfindliche Optiken, wie sie etwa bei der Halbleiterfertigung zur Belichtung von Wavern eingesetzt werden, um mit ultraviolettem Licht Photomasken zu belichten, ist eine extrem hohe Befestigungs-Präzision erforderlich. Eine einfache Klemmung eines optischen Bauteiles zwischen Metallteilen wird daher allgemein als unzureichend erachtet. Die Verwendung von Klebstoffen zur Befestigung der optischen Bauteile an Metallbefestigungen ist häufig unerwünscht, da derartige Klebstoffe ausgasen und die ausgasenden Komponenten im zur Belichtung vorgesehenen UV-Bereich absorbieren.

Aus der DE 42 16 337 A1 ist ein Bauteil für ein optisches, optoelektronisches oder elektronisches Gerät bekannt, das miteinander zu verbindende Teile aus zwei Metallen enthält, die verschiedene Wäremausdehnungskoeffizienten aufweisen. Ein durch Walzplattierung hergestelltes Verbindungsteil wird zwischen die aus den verschiedenen Metallen bestehenden Teile eingefügt. Die Verbindung des Verbindungsteiles mit den miteinander zu verbindenden Teilen erfolgt durch Schweißen, Löten oder Kleben.

Aus der EP 0 106 230 B1 ist ein Verfahren zum Anbringen und Justieren von Resonatorspiegeln eines Lasers bekannt, wobei Spiegelträger durch Ansprengen mit einer aus dem gleichen Werkstoff bestehenden Basis verbunden werden.

Es ist auch bereits bekannt, Metalle mit Nichtmetallen durch Ultraschallschweißen zu verbinden. Ein Verfahren hierzu wird in der DE-PS 23 12 724 beschrieben. Dieses Dokument befaßt sich mit einem Verfahren und einer Vorrichtung zum Ultraschallschweißen eines aus Metall bestehenden Teiles mit einem aus Nichtmetall bestehenden, mit einer Edelmetallschicht versehenen Teiles, z.B. eines piezokeramischen Plättchens, aber auch eines Quarz- oder Glasscheibchens unter Einfügung einer weiteren aus Metall bestehenden Zwischenlage. Es wird vorgeschlagen, daß man zunächst auf die gegenseitigen Verbindungsflächen des Metallteiles und des Nichtmetallteiles eine Aluminiumschicht oder -folie aufbringt, dann das nichtmetallische Bauteil festlegt und die mit Aluminium beschichteten Verbindungsflächen aufeinander legt und auf eine Temperatur von mindestens 250° C, vorzugsweise 350° C, vorwärmt und letztlich diese vorgewärmten Teile durch Ultraschallschweißen miteinander verbindet. Es wird als besonders vorteilhaft angegeben, die Metallteile in einem hochfrequenten elektromagnetischen Feld vorzuwärmen. Durch diese zusätzliche Fremderwärmung insbesondere einer Aluminiumschicht soll eine homogene ganzflächige Schweißverbindung erhalten werden und die beim Ultraschallschweißen der Bauteile aufzuwendende und oft zur Zerstörung des nichtmetallischen Bauteiles führende Schallenergie beträchtlich gemindert werden. Es wird vorgeschlagen, die Aluminiumzwischenschicht durch Aufdampfen, Aufspritzen im Plasmalichtbogen oder in Form einer zwischen die durch Schweißen zu verbindenden Bauteile einzufügenden Aluminiumfolie vorzusehen.

Problematisch ist, daß die Teile auf hohe Temperaturen vorgewärmt werden müssen und eine ganzflächige Verbindung erfolgen soll. Die ganzflächige Verbindung zum Metallträger verhindert die Verwendung mit transmissiven Optiken.

In der DE 19 546 997 C2 wird erwähnt, daß zum Verbinden von Teilen aus Aluminium mit Teilen aus Keramik das zunächst der vorgsehene Verbindungsbereich der Keramikteile durch Einbrennen einer Metallpaste, thermisches Spritzen oder dergleichen metallisiert werden kann, so daß anschließend die eigentliche Verbindung durch Hartlöten vorgenommen werden kann. Es wird dort alternativ vorgeschlagen, eine Verbindung durch Reibschweißen mit einer bestimmten Bewegungsform vorzunehmen.

Mit der Ultraschallschweißung von Metall und Glas befassen sich weiter eine Reihe von wissenschaftlichen Aufsätzen. Beispielhaft seien hier genannt 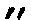 Neue Werkstoffverbunde durch Ultraschallschweißen" von E. Roeder, G. Wagner, J. Wagner in 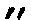 technologie & management" 44. Jahrgang , 1995, Seite 31 ff; 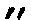 Ultraschall-Rollnahtschweißen von Glas und Keramik mit Metall" in 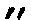 Schweißen & Schneiden" Band 49, 1997, Seite 564 ff. Im letztgenannten Aufsatz wird vorgeschlagen, daß eine Sonotrode durch eine statische Schweißkraft auf die Fügeteile gepreßt wird und auf den synchron mitbewegten Fügeteilen abrollt. Dabei soll die zum Fügen benötigte Energie analog zum Ultraschallschweißen von Metallen in Form von mechanischen Scherwellen in das der Sonotrode zugewandte Fügeteil eingeschallt werden. Die Ankopplung erfolgt aufgrund der sonotrodseitigen höheren mechanischen Beanspruchung und der günstigeren Ankopplung der Ultraschallschwingung über das metallische Werkstück, während das nichtmetallische Fügeteil hingegen rutschtest auf einer Gummiauflage plaziert ist, um eine Relativbewegung zum quer zur Schweißrichtung schwingenden metallischen Schweißpartner sicher zu stellen. Es wird vorgeschlagen, durch Kühlmittel die Fügetemperatur zu verringern und somit eine Verringerung der Eigenspannung im Verbund zu erreichen.

Das Ziel der vorliegenden Erfindung besteht darin, die Ultraschallschweißung von optischen Bauteilen an Metallbefestigungen auch für ausgedehnte optische Bauteile verfügbar zu machen, insbesondere, wenn diese aufgrund ihrer hohen Empfindlichkeit und/oder hohen optischen Qualität nur geringsten Belastungen ausgesetzt werden dürfen.

Das Ziel der vorliegenden Erfindung wird durch die Merkmale der unabhängigen Ansprüche gelöst. Bevorzugte Ausführungsformen sind in den abhängigen Ansprüchen angegeben.

Eine Grunderkenntnis der vorliegenden Erfindung besteht darin, daß gerade bei sehr empfindlichen optischen Bauteilen wie kristallinen Materialien, etwa CaF₂, welches im ultravioletten Bereich eingesetzt wird, eine Zerstörung des Bauteiles durch die zur Ultraschallschweißung erforderliche hohe Ultraschallenergie vermieden werden kann, wenn das optische Bauteil an vorbestimmten Stellen vibrationsdämpfend gehalten wird. Dabei soll gleichzeitig erfindungsgemäß sicher gestellt werden, daß auf das optische Bauteil nur allenfalls geringe Biegemomente durch die Sonotrode ausgeübt werden.

Die Ausübung allenfalls geringer Biegemomente bei gleichzeitig hohem Auflagedruck der Sonotrode, also hoher statischer Schweißkraft erlaubt es, die Ultraschallamplitude vergleichsweise gering zu wählen. So ist die sich durch das Material des ausgedehnten optischen Bauteiles ausbreitende Ultraschallenergie so niedrig, daß sie an der oder den vibrationsdämpfenden Halterungen soweit absorbiert werden kann, daß eine Zerstörung des optischen Bauteiles trotz einwandfreier Ausführung der Ultraschallschweißung vermieden werden kann. Zugleich tritt durch die Ultraschallschweißung nur ein Minimum an Scherbelastung auf.

Es ist besonders bevorzugt, wenn die Befestigungsstelle an einem Seitenrand des flächig ausgedehnten optischen Bauteiles vorgesehen ist und die vibrationsdämpfende Halterung auf den Randbereichen der Transmissionsflächen erfolgt. Dies stellt sicher, daß nur ein Mindestmaß an Biegemomenten ausgeübt wird. Zugleich kann eine weitere vibrationsdämpfende Halterung bei einer auf dem Seitenrand vorgesehenen Befestigungsstelle auf einer diametral gegenüberliegenden Seitenrandstelle vorgesehen werden, so daß die Sonotrode eine dorthin wirkende Druckkraft ausübt. Gegen derartige Druckkräfte sind typische optische Bauteile wie Quarzglas, Calciumfluorid, Bariumfluorid, Magnesiumfluorid, aber auch herkömmliche Gläser, wie sie etwa in Fensterscheiben, an Backöfen, an Autoscheinwerfern und dergleichen verwendet werden, besonders beständig. Das Verfahren der vorliegenden Erfindung ist mit diesen Elementen einsetzbar.

Es wird vorgeschlagen, daß das optische Bauteil nur an seinem Rand vibrationsdämpfend gehalten wird, also an seinem seitlichen Rand und/oder seinen Transmissionsflächenbereichsrand.

Wenn das transparente optische Bauteil an seinem Transmissionflächenrandbereich gehalten wird, sind besonders hohe Haltekräfte zu erzielen, wenn zur vibrationsdämpfenden Halterung elastische Glieder eingesetzt werden, die wenigstens einen Teil der Transmissionsfläche umgrenzen und dann zwischen dem umgrenzten Bereich des transparenten optischen Bauteiles und dem elastischen Gliedern ein Vakuum zur Fixierung des Bauteils erzeugt wird. Es kann vorgesehen werden, das transparente optische Bauteil von beiden Seiten her flächig zu halten.

In einem bevorzugten Verfahren wird zunächst das Bauteil von einer Seite gehalten, ein Vorvakuum angelegt und dann von der Gegenseite her angelegt, worauf zwischen beide Halterungen und im Bauteil ein höheres Vakuum angelegt wird.

Das Verfahren ist insbesondere geeignet für sehr spröde Materialien, insbesondere für Kristalle wie Calciumfluorid, Magnesiumfluorid oder Bariumfluorid. Es kann vorgesehen werden, auf diese Materialien an der vorgesehen Befestigungsstelle oder in einem diese umfassenden größeren Bereich eine Metallschicht aufzubringen. Insbesondere Aluminium ist als Metall geeignet, das aufgesputtert werden kann.

Bevorzugt kann die Befestigung aus Metall bestehen und es kann vorgesehen werden, eine mit einer galvanisierten Aluminiumschicht beschichtete Stahlfeder zum Ultraschallschweißen über diesen Aluminiumstreifen zu legen. Die Dicke der Stahlfeder kann 0,2 mm betragen.

Die Erfindung wird im folgenden nur beispielsweise an Hand der Zeichnung beschrieben. In dieser zeigt:
- Figur 1: ein optisches Bauteil in einer elastischen Halterung bei der Ultraschallverschweißung;
- Figur 2: eine zweite Ausgestaltungsform der vorliegenden Erfindung.

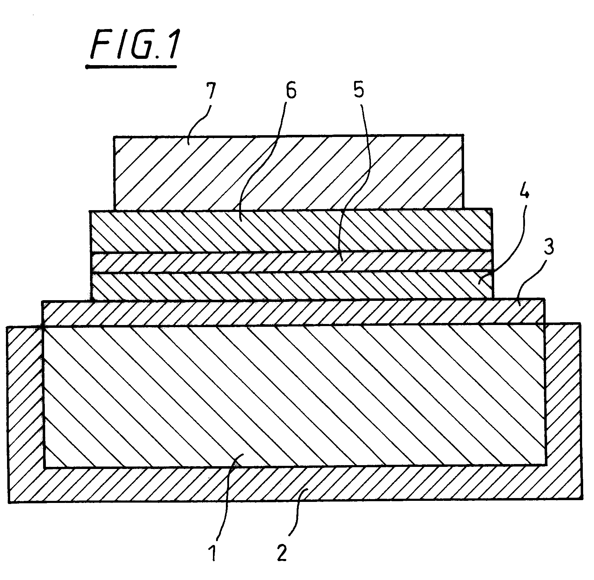

Nach Figur 1 ist als nichtmetallischem Werkstoff 1 z.B. für eine große Linse von mehr als 40 mm Durchmesser ein CaF₂-Einkristall vorgesehen. Das Calciumfluorid 1 ist von einer Gummischicht 2 in einer Dicke von z.B. 2 mm als elastische Schicht umgeben bzw. in die elastische Schicht eingebettet. Die elastische Schicht wirkt vibrationsdämpfend und ist insbesondere gegenüberliegend und benachbart der vorgesehen Befestigungsstelle vorgesehen.

Auf das Calciumfluorid als nichtmetallischem Werkstoff wird eine Aluminiumschicht 3 durch Sputtern aufgebracht. Die Dicke der Aluminiumsputterschicht 3 kann 0,05 mm betragen. Über die gesputterte Aluminiumschicht 3 wird ein Aluminiumstreifen 4 mit einer Höhe von z.B. 0,15 mm aufgebracht. Eine mit einer galvanisierten oder gesputterten Aluminiumnschicht 5 beschichtete Stahlfeder 6 wird zum Ultraschallschweißen über den Aluminiumstreifen 4 gelegt. Die Dicke der Aluminiumbeschichtung 5 kann ebenfalls 0,05 mm betragen. Die Dicke der Stahlfeder beträgt beispielsweise 0,2 mm.

Auf den vorstehend genannten Aufbau wird zum Ultraschallschweißen von einer Sonotrode 7 über die Stahlfeder 6 ein Anpressdruck in Form einer Flächenlast auf die miteinander zu verbindenden Bauteile aufgegeben, wobei die Sonotrode 7 eine Auslenkung von wenigen µm durchführt.

Je höher die Amplitude bei dem Schweißvorgang ist, desto gefährdeter ist die Calciumfluoridschicht 1. Die Gummischicht 2 hat jedoch eine deutliche Wirkung beim Schweißvorgang. Ebenso erhöht sich die Dämpfung und damit die Belastbarkeit der Calciumfluoridschicht 1 mit zunehmender Dicke der gesputterten Aluminiumschicht 3.

Durch die Aluminiumschicht 5 als Beschichtung für die Stahlfeder 6 wird ebenfalls zur Vermeidung von Schädigungen der Calciumfluoridschicht eine Dämpfung der Ultraschallwellen beim Schweißvorgang erreicht.

Das Ultraschallschweißen selbst wird in bekannter Weise durchgeführt.

Bei dem erfindungsgemäßen Verfahren bilden sich beim Schweißvorgang relativ rasch chemische Bindungen zwischen den blanken Aluminiumflächen aus, die für eine entsprechend gute Verbindung sorgen.

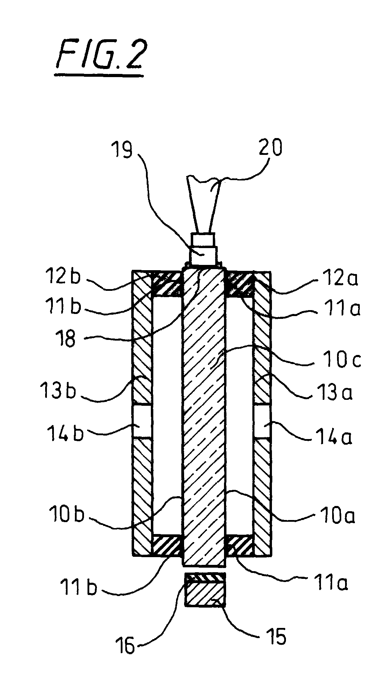

Eine weitere bevorzugte Variante der Erfindung wird mit Bezug auf Fig. 2 beschrieben.

In Figur 2 zeigt Bezugszahl 10 eine runde CaF₂-Scheibe 10 als flächiges transparentes optisches Bauteil, welches Transmissionsflächen 10a, 10b und wenigstens eine Seitenfläche 10c aufweist, die den Zylindermantel definiert.

Auf den äußeren Rändern 11a, 11b der gegenüberliegenden Transmissionsflächen 10a, 10b liegt jeweils ein um den Umfangsbereich umlaufender Gummiring 12a, 12b dicht auf. Das Gummi ist elastisch und weist eine hohe innere Dämpfung auf. Dazu kann das Gummigrundmaterial beispielsweise mit Zusatzstoffen versetzt sein wie Wolframpulver oder dergleichen.

Jeder Gummiring 12 steht auf seiner von der CaF₂-Scheibe 10 abgewandten Seite in druckdichtem Kontakt mit einer stabilen Metallplatte 13, die in ihrer Mitte eine Evakuierungsöffnung 14 aufweist, an welche eine Pumpleitung angeschlossen ist (nicht angezeigt).

Auf einer Seite der Umfangsfläche 10c ist ein stabiler Halter 15 vorgesehen, der an seiner zur CaF₂-Scheibe 10 gewandten Seite einen Gummischutz 16 trägt, auf welchem die CaF₂-Scheibe 10 aufliegt. Auf der diametral gegenüberliegenden Seite ist die Befestigungsstelle vorgesehen, an welcher eine Schicht 18 aus Aluminium auf die CaF₂-Scheibe aufgesputtert ist. Über der Schicht 18 ist ein metallisches Befestigungselement 19 aufgelegt, auf welches eine Sonotrode 20 drückt.

Mit einer solchen Anordnung wird eine Verbindung zwischen dem metallischen Befestigungselement 19 und der CaF₂-Scheibe 10 hergestellt wie folgt.

Zunächst wird die CaF₂-Scheibe 10 auf ihrem Umfang 10c mit der Metallschicht 18 versehen.

Die stabile Metallplatte 13b wird horizontal angeordnet und die CaF₂-Scheibe 10 mit ihrer Transmissionsfläche 10b auf den dazugehörigen Gummiring 12b aufgelegt. Durch die Evakuierungsöffnung 14 wird die Luft zwischen Platte 13b und Scheibe 10 bis auf ein Vorvakuum von z.B. 10⁻⁴ mbar entfernt. Die CaF₂-Scheibe 10 haftet dank ihres großen Durchmessers von z.B. über 40 mm dann so stark an der stabilen Metallplatte 13b, daß diese in die Vertikale bewegt werden kann, ohne daß die CaF₂-Scheibe abrutscht. Von der Gegenseite wird dann die zweite Metallplatte 13a mit dem Gummiring 12a gegen die zweite Transmissionsfläche 10a gelegt.

Die Hohlräume zwischen den beiden Platten 13a, 13b und der Scheibe werden evakuiert auf einen Druck, der unterhalb des Vorvakuums liegt. Der Evakuierungsdruck wird so gewählt, daß die Scheibe schon ohne Halterung 15 nicht unter dem Anpreßdruck der Sonotrode bewegt wird. Dies stellt sicher, daß selbst bei nicht exakt diametralem Gegenüberliegen von Schweißstelle und Halter die Scheibe allenfalls unwesentlich bewegt werden kann, was es erlaubt, wie zur Erzielung gleichmäßiger Resultate bevorzugt, bei der nachfolgenden Ultraschallschweißung mit einer Kraftregelung zu arbeiten. Dann wird die so gehaltene Scheibe im unteren Bereich des Umfangs 10c der CaF₂-Scheibe 10 auf den Gummischutz 16 des stabilen Halters 15 aufgesetzt. Auf der diametral gegenüberliegenden Seite wird das metallische Befestigungselement 19 über der Aluminium-Sputterschicht 19 angeordnet und auf das Befestigungselement 19 die Sonotrode 20 fest aufgedrückt.

Der Druck wird von der Halterung 15 weitgehend ohne auf die Optik einwirkende Scherkräfte aufgenommen. Das spröde und bei Anlegen von Biegemomenten bzw. Schwerkräften leicht zerbrechende Material widersteht dieser Belastung besonders gut. Dann wird die Sonotrode erregt und die Ultraschallschweißverbindung hergestellt. Dank der Dämpfung von Vibrationen durch die CaF₂-Scheibe eindringende Ultraschallenergie an den Gummiringen 12 insbesondere benachbart der Schweißstelle und an der diametral allgemein gegenüberliegenden Halterung 15 besteht keine Gefahr eines Materialbruches.

Das Verfahren ist anwendbar insbesondere zur Herstellung großer UV-Optiken mit einem Durchmesser von wenigstens 40 mm und für Wellenlängen kürzer als 365 nm, wie sie bei der Belichtung von Halbleitermasken angewendet werden. Andere Anwendungen umfaßt die - erwünscht hitzebeständige - Verbindung von Autoscheinwerfergläsern mit Reflektoren, Backofentüren mit Sichtfenstern, Glaskomponenten im Fassadenbau usw.

## Patentansprüche

1. Verfahren zur Verschweißung eines ausgedehnten optischen Bauteils an eine Metallbefestigung, worin das transparente optische Bauteil zumindest an seinem Rand allgemein gegenüberliegend und benachbart einer vorgesehenen Befestigungsstelle vibrationsdämpfend gehalten wird, die Metallbefestigung auf die vorgesehene Befestigungsstelle am Rand des ausgedehnten optischen Bauteils aufgesetzt wird, die Sonotrode auf die Befestigung unter Ausübung allenfalls geringer Biegemomente aufgesetzt und die Ultraschallschweißung durchgeführt wird.

2. Verfahren nach Anspruch 1, worin das transparente optische Bauteil ausschließlich an bzw. nahe seinem Rand vibrationsdämpfend gehalten wird.

3. Verfahren nach einem der vorgehenden Ansprüche, worin das transparente optische Bauteil in Kontakt mit einem wenigstens einem Teil seiner Fläche umgrenzenden elastischen Glied zur vibrationsdämpfenden Halterung gebracht und zwischen Glied und transparenten optischen Bauteil ein Vakuum zur Bauteilfixierung erzeugt wird.

4. Verfahren nach einem der vorhergehenden Ansprüche, worin als transparentes optisches Bauteil eine ausgedehnte Linse an wenigstens beiden Transmissionsflächen gehalten wird.

5. Verfahren nach Anspruch 3 und 4, worin das transparente optische Bauteil während der Schweißung von beiden Transmissionsflächen mittels Vakuum gehalten wird.

6. Verfahren nach dem vorgehenden Anspruch, worin das transparente optische Bauteil zunächst in Kontakt mit einem ersten elastischen Glied gebracht wird, zwischen erstem Glied und Bauteil ein Vorvakuum angelegt wird, der Kontakt zwischen optischem Bauteil und dem zweiten elastischen Glied hergestellt wird und zwischen beiden elastischen, vibrationsdämpfenden Gliedern und dem Bauteil ein Vakuum mit einem niedrigeren Druck als jenem des Vorvakuums angelegt wird.

7. Verfahren nach einem der vorgehenden Ansprüche, worin der Vorvakuumdruck in der Größenordnung von 10⁻⁴ mbar und der Hauptvakuumdruck in der Größenordnung von 10⁻⁶ mbar liegt.

8. Verfahren nach einem der vorgehenden Ansprüche, welches auf die Verbindung eines transparenten optischen Bauteils mit einem Durchmesser von 40 mm und mehr angewendet wird.

9. Verfahren nach einem der vorgehenden Ansprüche, welches auf die Verbindung eines transparenten optischen Bauteils mit einer hohen Transmission und Abbildungsqualität für Wellenlängen von 365 nm und darunter angewendet wird.

10. Verfahren nach einem der vorhergehenden Ansprüche, welches auf die Verbindung eines transparenten optischen Bauteils aus Calciumfluorid, Bariumfluorid oder Quarzglas mit einer Metallbefestigung angewendet wird.

11. Verfahren nach einem der vorgehenden Ansprüche, insbesondere nach Anspruch 10, worin auf das transparente optische Bauteil an der beabsichtigten Befestigungsstelle vorbereitend vor dem Aufsetzen der Metallbefestigung eine Schicht aus Metall aufgebracht wird.

12. Verfahren nach dem der vorhergehenden Anspruch, worin Aluminium als Metallschicht auf das transparente optische Bauteil an der Befestigungsstelle aufgebracht wird.

13. Verfahren nach Anspruch 11 oder 12, worin die Metallschicht durch Sputtern aufgebracht wird.

14. Verfahren nach einem der vorgehenden Ansprüche, worin zwischen Sonotrode und Metallbefestigung eine Metallfeder angeordnet wird.

15. Verfahren nach Anspruch 14, dadurch gekennzeichnet, daß die Metallfeder vor ihrer Verwendung mit einer weiteren Beschichtung versehen wird.

16. Verfahren nach Anspruch 15, dadurch gekennzeichnet, daß eine Aluminiumschicht als weitere Beschichtung auf der Metallfeder insbesondere durch Sputtern oder galvanisch aufgebracht wird.

17. Verfahren nach einem der vorgehenden Ansprüche, dadurch gekennzeichnet, daß als Metallteil Aluminiumstreifen verwendet werden.

18. Verfahren nach einem der vorgehenden Ansprüche, worin die Metallbefestigung auf einen Seitenrand des ausgedehnten optischen Bauteils aufgesetzt wird.

19. Baugruppe, die ein ausgedehntes optisches Bauteil und eine Metallbefestigung zur Halterung des optischen Bauteils aufweist, welche an wenigstens einer Verbindungsstelle miteinander verbunden sind, dadurch gekennzeichnet, daß das transparente optische Bauteil seitlich eine Metallschicht trägt und an der wenigstens einen Stelle zumindest eine Ultraschallschweißstelle, insbesondere -naht zwischen der Metallbefestigung und der Metallschicht des transparenten optischen Bauteils und/oder dem transparenten optischen Bauteil selbst vorgesehen ist.

20. Baugruppe nach dem vorhergehenden Anspruch, worin das transparente optische Bauteil aus Calciumfluorid, Bariumfluorid oder Quarzglas besteht.

21. Baugruppe nach Anspruch 19 oder 20, worin das Metallteil aus Aluminiumstreifen besteht und/oder die Metallschicht aus Aluminium besteht.

22. Baugruppe nach Anspruch 19 oder 20, worin das optische Bauteil einen Durchmesser bzw. eine Linearabmessung von wenigstens 40 mm besitzt und für die Abbildung von UV-Licht mit einer Wellenlänge von 365 nm und darunter ausgelegt ist.
